# EUROPEAN PATENT APPLICATION

(11) **EP 1 238 692 A2**
(43) Date of publication of application: **11.09.2002**
(21) Application number: 02250900.4
(22) Date of filing: 08.02.2002
(51) Int. Cl.: A63F 13/12

(54) **Program distribution system**

(30) Priority: 06.03.2001 JP 2001062485; 15.01.2002 JP 2002005857
(71) Applicant: Sony Computer Entertainment Inc., Tokyo 107-0052 (JP)
(72) Inventor: Takatsuka, Susumu, c/o Sony Comp. Entert. Inc., Tokyo 107-0052 (JP); Miyaki, Satoru, c/o Sony Comp. Entert. Inc., Tokyo 107-0052 (JP); Matsumoto, Shingo, c/o Sony Comp. Entert. Inc., Tokyo 107-0052 (JP)
(74) Representative: Turner, James Arthur

(57) **Abstract**

A program information distribution apparatus manages a pre-distributed plurality of elemental information for a program scene configuration. Then, the program information distribution apparatus specifies a plurality of elemental information, which is to be utilized for configuring a desired program scene, out of a plurality of elemental information for program scene configuration that a network terminal apparatus holds; generates terminal control information for configuring the desired program scene by combining each piece of the specified elemental information; and distributes to the network terminal apparatus. On the other hand, the network terminal apparatus pre-holds a plurality of elemental information for program scene configuration. Then, the network terminal apparatus receives predetermined control information distributed from the program information distribution apparatus via a network; determines a plurality of elemental information specified by the predetermined control information out of the pre-held plurality of elemental information; and configures a program scene by combining each piece of the determined plurality of elemental information.

## Description

In recent years, services for distributing television programs and the like that utilize, for example, the Internet, continue to be put to practical use. A program distribution server distributes program data during program distribution utilizing the Internet. Then, personal computers and the like that are linked to the Internet receive this program data, displaying thereof. Note that "program" does not mean a computer program and that a computer program is particularly expressed as "software", in the description below.

However, the present communication environment still cannot be considered efficient in terms of communication capacity and speed. Accordingly, it is difficult to evaluate the quality of program images and the like distributed by utilizing the Internet as satisfactory.

Such methods as described below have considered such problems in recent years. The program data are divided into those stored in an optical disk which is pre-distributed to a user and those which a server distributes while the user views a program. It is noted that the pre-distributed data may be image data such as a stage, scene and background of the program, and data for characters appearing in the program. Also, the data which the server distributes while the user views program is text data and image data of little capacity. While the user is actually viewing programs via the Internet, a network terminal device of the user generates and displays on a monitor screen, images such as a stage, scene and background of the program and characters based on the pre-distributed data. When the text data or image data is distributed from the server, the network terminal device inserts the text or image into a scene.

However, in the case of this method, the network terminal device generates programs in which the stage, scene and background are always the same from the pre-distributed data, and displays a character always same in the program. Accordingly, the program becomes one where the stage, scene and characters that appear are always the same, therefore becoming a program that has little variation.

Various respective aspects and features of the invention are defined in the appended claims. Features from the dependent claims may be combined with features of the independent claims as appropriate and not merely as explicitly set out in the claims.

The present invention takes such problems into consideration, and aims to provide a program information distribution method and apparatus; a program configuration method and software running apparatus; a program distribution system; recording media; and program configuration software, allowing for the generation of programs that can not only maintain sufficient image quality, but also that enables variation in stage, scene, character, background, image and the like within the program, even under the present inefficient communication environment in cases where program distribution is carried out utilizing, for example, the Internet, so as to allow for distribution of programs that may further raise the interest level of the viewers.

With the present invention, the program information distribution apparatus manages a plurality of pre-distributed elemental information for program scene configuration. The program information distribution apparatus specifies a plurality of elemental information, which is to be utilized for configuring a desired program scene, from a plurality of elemental information for program scene configuration that a network terminal apparatus holds; generates terminal control information for configuring the desired program scene by combining each piece of the specified plurality of elemental information; and distributes it to the network terminal apparatus.

Furthermore, with the present invention, the network terminal apparatus pre-holds a plurality of elemental information for program scene configuration. The network terminal apparatus receives predetermined control information distributed from the program information distribution apparatus via a network; determines a plurality of elemental information specified by the predetermined control information from the pre-holding plurality of element information; and configures a program scene by combining each piece of the determined plurality of elemental information.

In other words, with the present invention, the network terminal apparatus has prepared a plurality of elemental information for program scene configuration; on the other hand, the program information distribution apparatus manages content of a plurality of elemental information, which is prepared in the network terminal apparatus. Then, the program information distribution apparatus transmits to the network terminal apparatus the control information that is used to determine the elemental information for configuring the desired program scene and specifies the combinations thereof. Therefore, according to the present invention, the program information distribution apparatus can allow for freely configuring a program scene within the boundaries of the prepared program configuration elements and their combinations for the network terminal apparatus.

As a result, the present invention allows for the generation of programs that can not only maintain sufficient image quality, but also that allows variation in stage, scene, character, background, image and the like within the program, even with the present inefficient communication environment in cases where program distribution is carried out by utilizing a network such as the Internet, for example; moreover, allowing for distribution of programs that may further raise the interest level of the viewers.

The invention will now be described by way of example with reference to the accompanying drawings, throughout which like parts are referred to by like references, and in which:
FIG. 1 is a diagram showing an example of the schematic structure of a communication system.
FIG. 2 is a diagram showing an example of the sequence arrangement that configures a sequential program.
FIG. 3 is a drawing illustrating a scene where characters are talking while taking a drive in a car.
FIG. 4 is a diagram illustrating a scene development where a character is introducing contribution text.
FIG. 5 is a diagram used in the description of the configuration of an accumulated program file.
FIG. 6 is a diagram used in the description of the configuration of conversation attribute information.
FIG. 7 is a diagram used in the description of the configuration of a fixed text table.
FIG. 8 is a diagram used in the description of the configuration of a transmitting program file.
FIG. 9 is a diagram used in the description of the configuration of sequence information and scene information.
FIG. 10 is a diagram used in the description of the configuration of conversation information.
FIG. 11 is a diagram used in the description of the configuration of emotion flags.
FIG. 12 is a drawing illustrating a scene where characters are carrying out a conversation and the like.
FIG. 13 is a drawing illustrating a scene where a character is presenting the "Top Ten" of the Hit Charts.
FIG. 14 is a block diagram used in the description of the configuration for accumulated program file generation and a generating process thereof.
FIG. 15 is a block diagram used in the description of the configuration for transmitting program file generation and a generating process thereof.
FIG. 16 is a drawing illustrating the schematic structure of an entertainment system.
FIG. 17 is a block circuit diagram showing the schematic structure of the internal circuitry of software running apparatus.
FIG. 18 is a diagram used in the description of the data configuration of application software.
FIG. 19 is a flowchart showing the main process flow of application software.

Various embodiments of the present invention will be described with reference to the accompanying drawings. It is to be noted that the same or similar reference numerals are applied to the same or similar parts and elements throughout the drawings, and the description of the same or similar parts and elements will be omitted or simplified.

### Overall Structure of Communication System

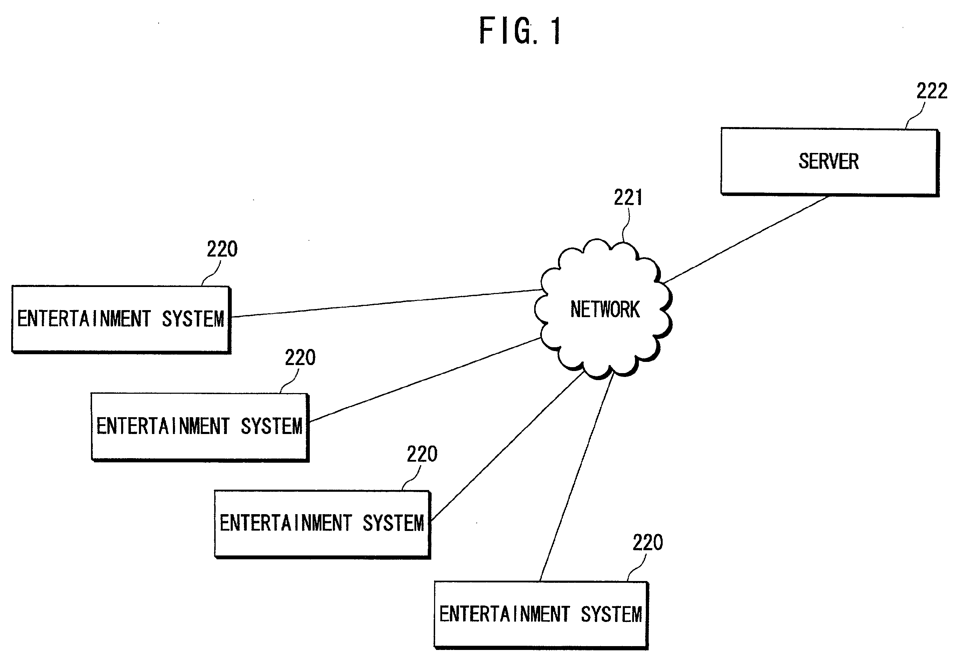

The communication system of the embodiments of the present invention, as shown in FIG. 1, is configured of a server 222, which is a program information distribution apparatus of the present invention that is linked to a network 221, and a plurality of entertainment systems 220, which are made accessible through the network 221 to the server 222.

The server 222 is made capable of transmitting information for configuring such sequential programs as described below to the entertainment systems 220. In addition, the entertainment systems 220 configures the sequential programs based on information internally prepared and information transmitted from the server 222, and is made capable of outputting images, sound, musical tones and the like of the sequential programs to a monitor device. It is noted that a file of information, which the server 222 transmits to the entertainment systems 220, is called a transmitting program file, and the information which the entertainment systems 220 accumulates is called an accumulated program file. The accumulated program file is provided as a recorded medium such as an optical disk by, for example, a program servicing company. In addition, the network 221 is, for example, the Internet. The entertainment systems 220 are linkable to the Internet and the like through communication lines, which include wireless data communication lines, for mobile phones and the like. The server 222 is a predetermined Web site (Web server) over the Internet. Detailed structures of the server 222 and entertainment systems 220 will be described later.

### Outline of Sequential Program

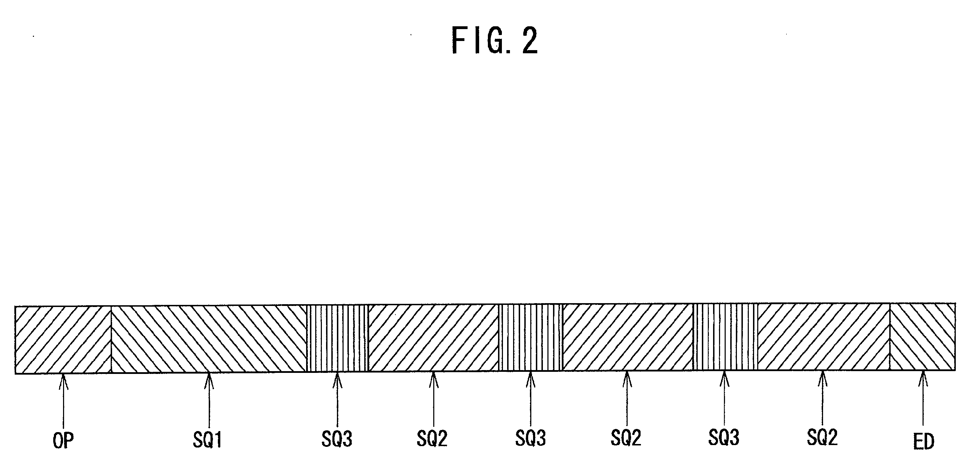

The sequential program is comprised of, as shown in FIG. 2, a combination such that an opening OP is provided to begin with; next, a first sequence SQ1 with the longest running time, a second sequence SQ2 with a shorter running time than the first sequence SQ1, a third sequence SQ3 with the shortest running time and such, are arranged; and an ending ED coming afterwards. Each of the sequences SQ1, SQ2 and SQ3 includes one or more scenes respectively. Furthermore, the running time for the first sequence SQ1 is, for example, approximately 5 minutes, the second sequence SQ2 approximately 2 minutes, and the third sequence SQ3 under 1 minute. The running time for the entire sequential program configured by each of these sequences is 15 minutes or 30 minutes or the like. It is needless to say that these running times, broadcasting order, combination and such of each sequence are not limited to the example, and can be set on demand when necessary.

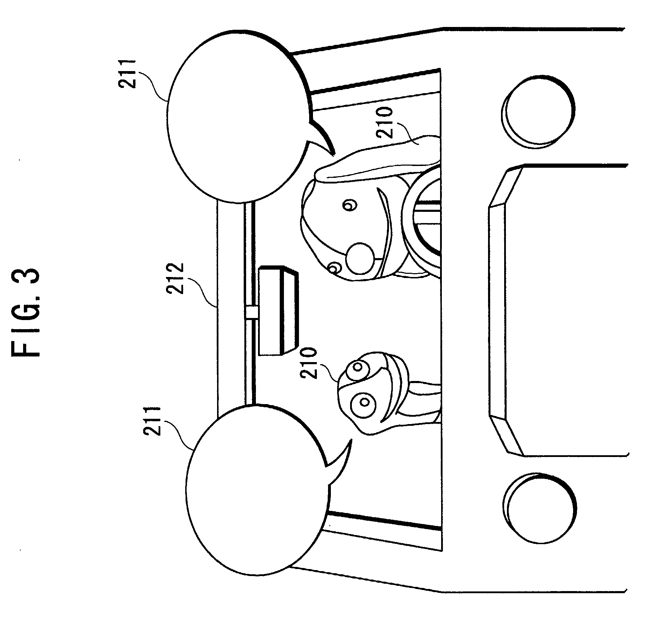

The first sequence SQ1 is a segment from which a scene is broadcasted where, as shown in FIG. 3, characters 210 generated by computer graphics appear, wherein these characters 210 are carrying out a conversation or drama or the like. It is noted that the example in FIG. 3 illustrates one scene where characters 210 are talking while taking a drive in a car 212. The scene illustrated in FIG. 3 is an example, and the scene to be broadcasted in the first sequence SQ1 is not limited to this example. Furthermore, in this embodiment, contents of the conversations and remarks and the like by the characters 210 are indicated in balloons 211, as shown in FIG. 3, or upon square text boards. Moreover, contents of the conversations and such may be output as sound if required. The same method of expressing the contents of the conversations and such is employed with the second and third sequences SQ2 and SQ3.

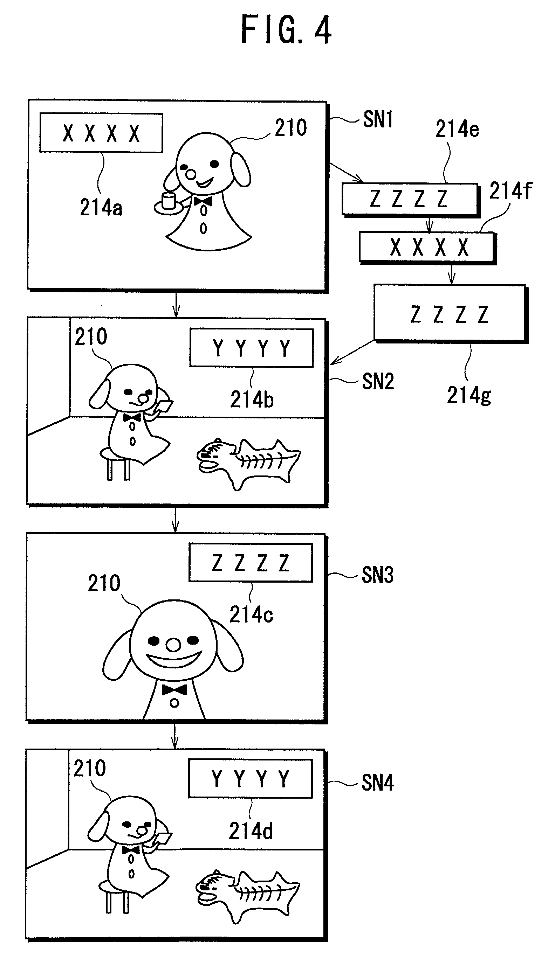

The second sequence SQ2 is a segment from which a scene is broadcasted where, for example, a relatively long contribution text is introduced or presents for viewers are announced. FIG. 4 represents an example of the development of the scenes broadcasted in this second sequence SQ2. To begin with, as a first scene SN1, a character 210 relates a first fixed text 214a (for example, "We have so many postcards here today." and such). Next, as a second scene SN2, the character 210 relates the first half of a contribution text 214b. Moreover, as a third scene SN3, the character 210 relates a comment (inserting text) regarding the contribution contents. Afterwards, as a fourth scene SN4, the character 210 relates the latter half of the contribution text 214d. It is noted that this scene development of the second sequence SQ2 as shown in FIG. 4 is strictly an example, wherein various combinations according to length and content of the contribution text may be considered. For example, in the case of a long contribution text, scenes where the character 210 relates an inserting text 214e of "ZZZZ", a fixed text 214f of "XXXX" and an inserting text 214g of "ZZZZ" may be added in between shifting from the first scene SN1 into the second scene SN2.

The third sequence SQ3 is a segment from which a scene (omitted from the figures) is broadcasted where, for example, a brief contribution text is introduced using a message board.

It is noted that the characters 210, the stage, background, music, sound effects and the like, which are run in the first sequence SQ1, second sequence SQ2 and third sequence SQ3, may be changed at every broadcast, or every day, week or month.

### Example of Configuration of Accumulated Program File and Transmitting Program File

Such sequential programs as described above are generated based on the transmitting program file, which is transmitted from the server 222 to the entertainment systems 220, and the accumulated program file, which is prepared within the entertainment systems 220.

### Configuration of Accumulated Program File

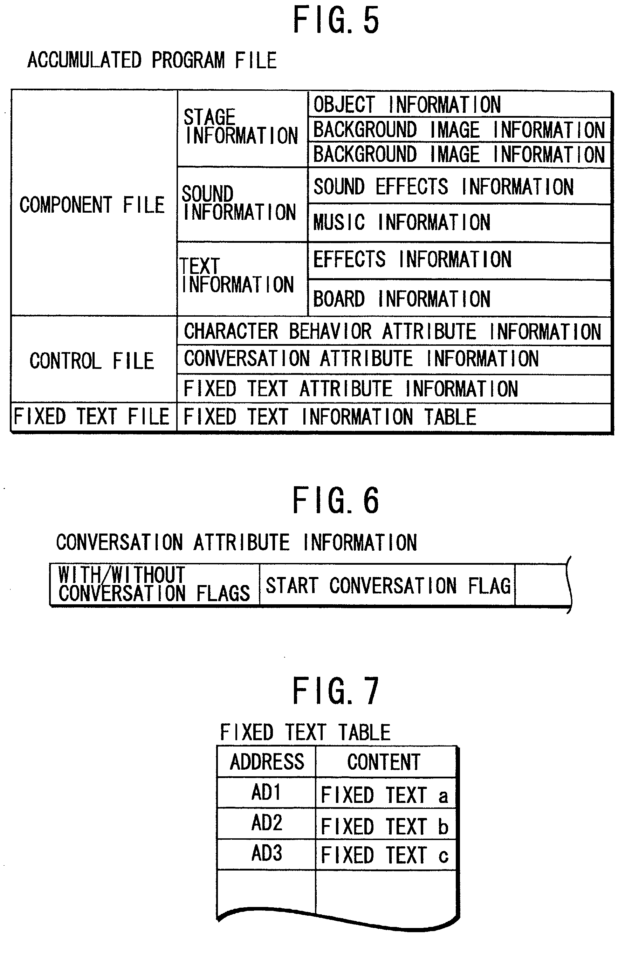

The accumulated program file includes, as shown in FIG. 5, at least a component file, control file and fixed text file.

The component file is comprised of each piece of component information classified for each category as shown in FIG. 5. The component file includes at least stage information, sound information and text information for each scene of a program. The stage information includes at least object information and two pieces of background image information. The sound information includes at least sound effects information and music information. The text information includes at least effects information and board information.

The object information is information for generating character objects and other accessory objects to be arranged in a scene (1 stage). The possible number of objects to be generated from the object information is 128 objects, for example. Furthermore, out of the two pieces of background image information, one is photographic image information for the background of each scene, and the other is photographic image information for the background utilized by attaching onto a polygon. The possible number of photographic images to be generated from each of these pieces of background image information is respectively 128 images, for example.

The sound effects information is information for generating various sound effects to be aired in each scene and the like. The possible number of types of sound effects to be generated from this sound effects information is, for example, 256 types. Furthermore, the music information is information for stream playback of various musical pieces in each scene and the like. The possible number of musical pieces to be generated from this music information is, for example, 64 pieces.

The effects information is information for realizing various effects arising within each scene. The possible number of types of effects to be realized from this effects information is, for example, 20 types. Furthermore, the board information is information for displaying boards (the text board 211, corner titles also included), whereupon accounts of the text information are given for each scene. The possible number of boards to be displayed from this board information is 30 boards, for example.

Next, the control file, as shown in FIG. 5, has at least character behavior attribute information, conversation attribute information and fixed text attribute information.

The character behavior attribute information is comprised of at least control data which expresses the routine behavior of each character appearing in a scene, and control data which expresses four types of behaviors corresponding to the feelings of joy, anger, sorrow and pleasure of each character. It is noted that the control data, which expresses four types of behaviors corresponding to the feelings of joy, anger, sorrow and pleasure, is comprised of four pieces of control data, which express the joyful behavior, angry behavior, sad behavior and cheerful behavior of the characters.

The conversation attribute information, as shown in FIG. 6, includes at least bit information that indicates whether or not a conversation text is present, and bit information that indicates when to begin and end a conversation.

The fixed text attribute information is an address (fixed text number) for when reading the desired fixed text from such fixed text table, as shown in FIG. 7. In other words, addresses (AD) are assigned to each fixed text a, b, c, ... of the fixed text table, respectively; wherewith by specifying that address from the fixed text attribute information, the desired fixed text may be read from the fixed text table.

### Configuration of Transmitting Program File

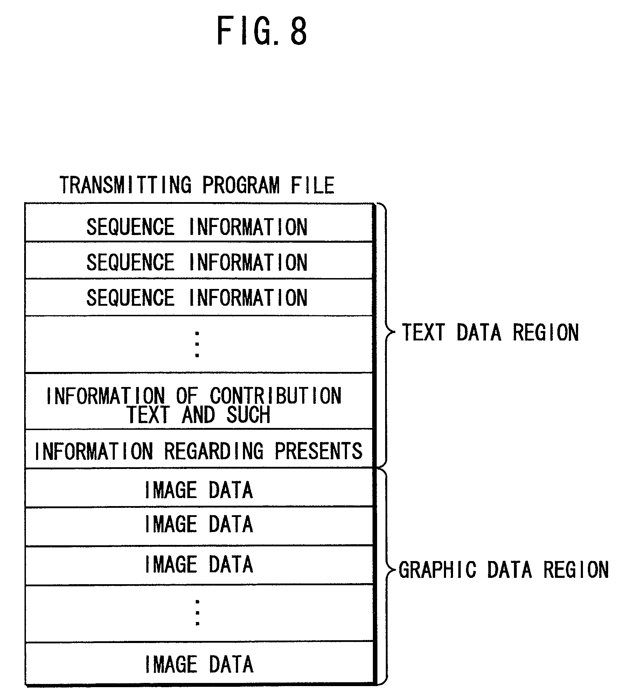

The transmitting program file, as shown in FIG. 8, has at least a text data region in which information content is expressed in text data form, and a graphic data region.

The text data region includes text information such as contribution text and a plurality of sequence information as shown in FIG. 2 and information regarding presents. The graphic data region includes one or more image data such as images of background not included in the accumulated program file, the aforementioned image for a scene introducing recommended shops or an image for a concert notification.

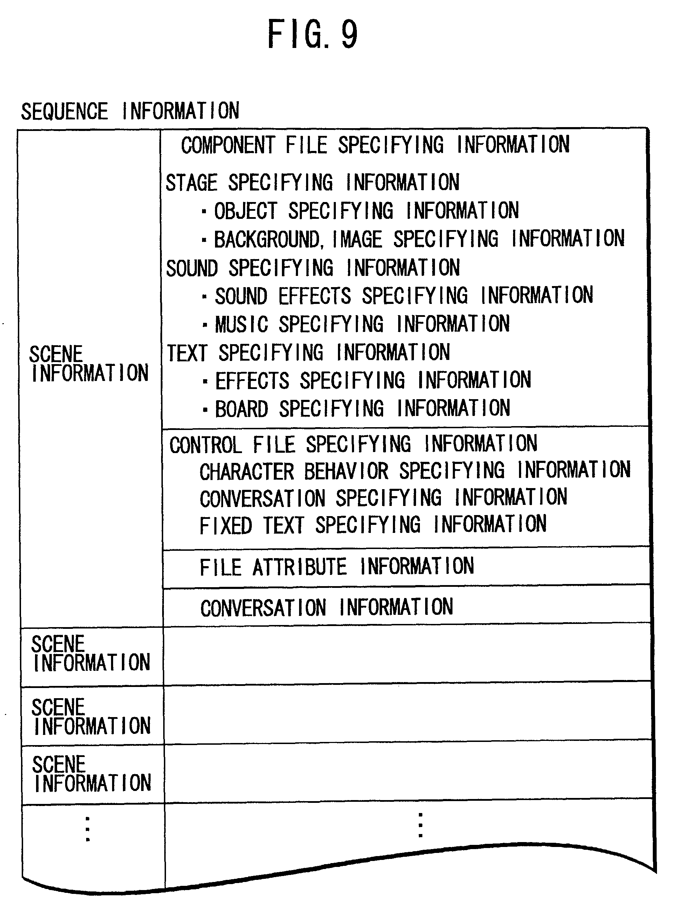

The sequence information within the text data region, as shown in FIG. 9, is configured by arranging one or more pieces of scene information that configures the sequence information in the order of broadcast, for example.

One piece of scene information includes at least a component file specifying information, control file specifying information, file attribute information, conversation information and the like.

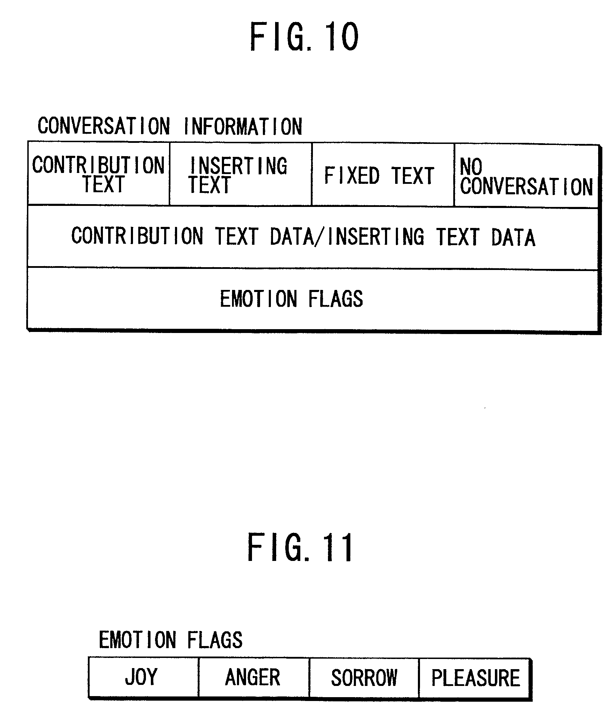

The conversation information within the scene information, as shown in FIG. 10, includes at least bit information indicating if there is any one of a contribution text, inserting text, fixed text, or no conversation; text data of contribution text or inserting text; and emotion flags. It is noted that the emotion flags, as shown in FIG. 11, have at least four bits of information corresponding to the feelings of joy, anger, sorrow and pleasure. The server 222 sets the bit information corresponding to "pleasure" to be "1" if the contribution text or inserting text is of happy content. On the other hand, in the case where feelings of joy, anger, sorrow and pleasure are not indicated, the server 222 sets each bit of the emotion flags to be "0". Furthermore, the server 222 sets the bit information of the emotion flags corresponding to the feelings of joy, anger, sorrow and pleasure to be "1" or "0" with the inserting text as well.

The file attribute information is at least information indicating each component file of the accumulated program file prepared within the entertainment systems 220 and the main structural elements thereof; a control file and the main structural elements thereof; a recording place for the fixed text table of the fixed text file (for example, the address of a recording medium such as an optical disk); and identification codes and the like.

The component file specifying information is information for respectively specifying each piece of component information in the component file, described above in FIG. 5, which is to be utilized in one scene. This information is comprised of at least stage specifying information, sound specifying information and text specifying information. The stage specifying information is information for respectively specifying, out of the plurality of object information such as characters and plurality of background image information included in the stage information described above in FIG. 5, which of the object information and background image information are to be used. The sound specifying information is information for respectively specifying, out of the plurality of sound effects information and music information included in the sound information described above in FIG. 5, which of the sound effects information and music information are to be used. The text specifying information is information for respectively specifying, out of the plurality of effects information and board information included in the text information described above in FIG. 5, which of the effects information and board information are to be used.

The control file specifying information is information for respectively specifying each piece of attribute information in the control file described above in FIG. 5, which is to be utilized in one scene. This information is comprised of at least character behavior specifying information, conversation specifying information and fixed text specifying information. The character behavior specifying information is information for specifying which of the character behavior attribute information included in the control data described above in FIG. 5 is to be used. The conversation specifying information is information for specifying which value to set the flags of the conversation attribute information described in FIG. 6. The fixed text specifying information is information for specifying which of the fixed text in the fixed text table described in FIG. 7 is to be retrieved.

### Changes in Program Configuration

As described above, the sequence information (in particular, the scene information) within the transmitting program file is information made capable of specifying on the server 222 side which of each main structural element of each component file and control file of the accumulated program file are to be used. In other words, the server 222 is made capable of freely (freely within the range of possible combination patterns) setting the program configuration, characters, background, music, sound effects and such of the scenes and stages and the like to be output to the monitor device of the entertainment systems 220 by each piece of the specifying information of the transmitting program file.

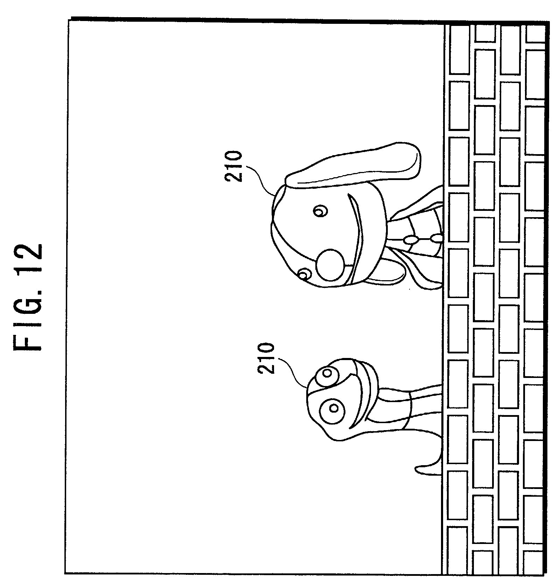

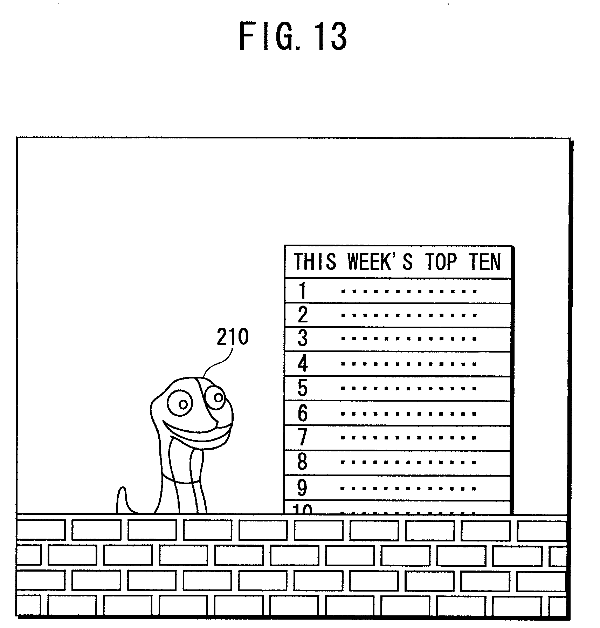

According to the above, concerning the desired sequence of the program to be broadcasted on the entertainment systems 220, in exchange for a scene such as previously described in FIG. 3, for example, the server 222 may configure another scene, as shown in FIG. 12 for example, where two characters 210 carry out a conversation and the like in a different place. Furthermore, concerning the desired sequence of the program to be broadcasted on the entertainment systems 220, the server 222 may configure a scene such that, as shown in FIG. 13 for example, one character 210 presents the "Top Ten" of the Hit Charts in movies, music and the like, or introduces suggested shops that are recommended by viewers, for example.

Needless to say, these scenes of FIG. 12 and FIG. 13 are just examples, wherewith concerning the desired sequence of the program to be broadcasted on the entertainment systems 220, the server 222 may configure various other stages and program configurations.

It is also needless to say that the server 222 can not only distribute programs where the stages and scenes are changed as described above, but also programs that show the same fixed stages and scenes every time. It is noted that in this case, data for each main structural element that does not vary upon program configuration, such as the stage and scene within the program, characters, background and images that appear in the program are prepared in the entertainment systems 220. Then, using that prepared data for each main structural element, the entertainment systems 220 always display upon the monitor screen the program comprised of the same stages and scenes. The remaining varied stages and scenes may be combined together with the repeated fixed stages and scenes.

### Production Process of Accumulated Program File and Transmitting Program File

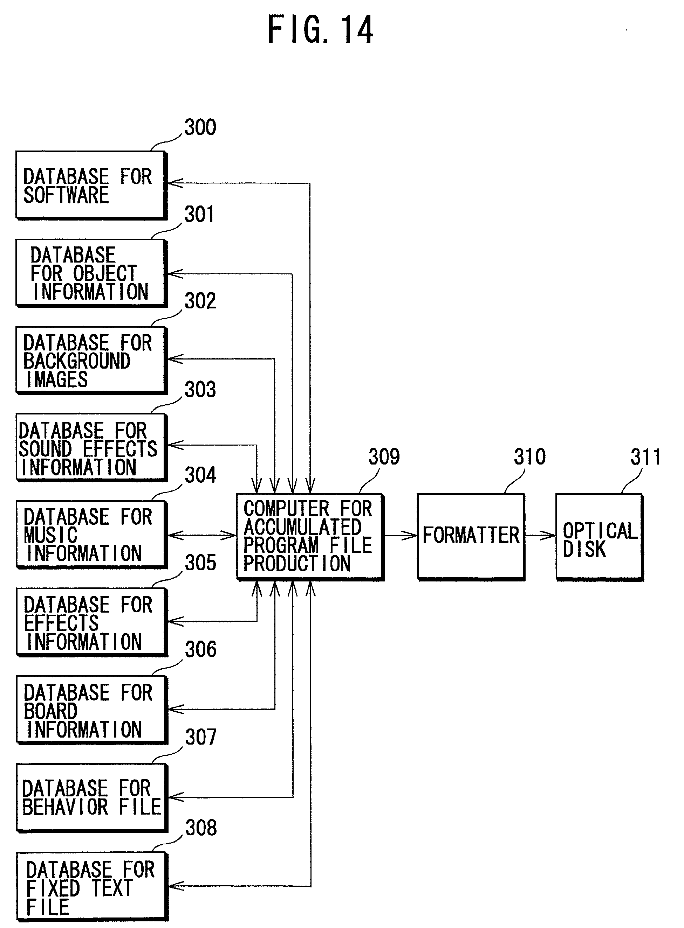

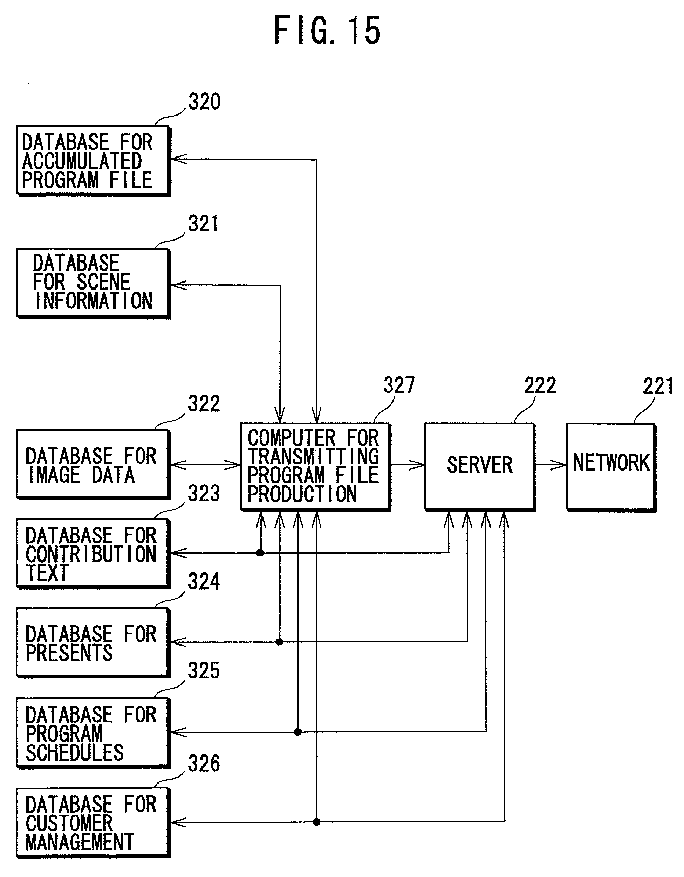

Next, the production process of the above accumulated program file and transmitting program file will be described using FIG. 14 and FIG. 15.

### Production Process of Accumulated Program File

The accumulated program file is produced with the configuration and process to be described using FIG. 14, for example.

In this FIG. 14, a computer 309 for producing the accumulated program files (hereafter notated as APF computer 309) is connected to at least a database 301 for object information (hereafter notated as object DB 301), a database 302 for background images (hereafter notated as background DB 302), a database 303 for sound effects information (hereafter notated as sound effects DB 303), a database 304 for music information (hereafter notated as music DB 304), a database 305 for effects information (hereafter notated as effects DB 305), a database 306 for board information (hereafter notated as board DB 306), a database 307 for a behavior file (hereafter notated as behavior data DB 307) and a database 308 for a fixed text file (hereafter notated as fixed text DB 308). Furthermore, the APF computer 309 is connected to a database 300 for software (hereafter notated as software DB 300). The software DB 300 accumulates computer software for the entertainment systems 220 to produce program images, sound, musical tones and such according to the transmitting program file so as to output to a monitor device.

The APF computer 309 produces information to accumulate in each of the DBs 301 to 308. Furthermore, the APF computer 309 performs controlling of writing/reading of the information concerning each of the DBs 301 to 308.

Namely, the APF computer 309 forms the object information for each character and other accessories appearing within each program sequence and accumulates them into the object DB 301. Furthermore, the APF computer 309 forms the background image information by acquiring and editing photographs and the like for the background image to be displayed within each program sequence, and accumulates them in the background DB 302. It is noted that aside from acquiring and editing photographs for the background image information, the APF computer 309 also forms background image information by three-dimensional computer graphics (CG), seasonal background image information, background image information corresponding to various memorial days, and background image information imitating major cities and the like. Similarly, the APF computer 309 forms the sound effects information to be aired within each program sequence, and accumulates them in the sound effects DB 303. As in the following, the APF computer 309 performs acquiring and editing of music information so as to accumulate in the music DB 304. The APF computer 309 produces the effects information to be shown on the screen of each program sequence so as to accumulate in the effects DB 305. The APF computer 309 produces board information so as to accumulate in the board DB 306. Moreover, the APF computer 309 produces the character behavior attribute information, conversation attribute information and fixed text attribute information so as to accumulate into the behavior data DB 307. Furthermore, the APF computer 309 produces a fixed text table so as to accumulate in the fixed text DB 308.

Next, the APF computer 309 configures the stage information of aforementioned FIG. 5 from the object information accumulated in the object DB 301 and the background image information accumulated in the background DB 302. Similarly, the APF computer 309 configures the sound information of aforementioned FIG. 5 from the sound effects information accumulated in the sound effects DB 303 and the music information accumulated in the music DB 304. The APF computer 309 configures the text information of the aforementioned FIG. 5 from the effects information accumulated in the effects DB 305 and the board information accumulated in the board DB 306. Furthermore, the APF computer 309 configures the component file from this stage information, sound information and text information. Moreover, the APF computer 309 configures the control file from the character behavior attribute information, conversation attribute information and fixed text attribute information accumulated in the behavior data DB 307. Furthermore, the APF computer 309 configures the fixed text file from the fixed text table accumulated in the fixed text DB 308. It is noted that in the case where there are pre-chosen stages and scenes in the program stream, the APF computer 309 determines the characters and various small objects appearing in the stages and scenes, the sound effects and music, conversational texts and the like, producing the control file for these stages and scenes.

Subsequently, the APF computer 309 configures the accumulated program file of FIG. 5 by using the component file, control file and fixed text file configured as described above. Furthermore, the APF computer 309 reads the computer software from the software DB 300, sending the accumulated program file and computer software to a formatter 310.

The formatter 310 converts the accumulated program file and computer software into data for recording, recording the data onto an optical disk 311. It is noted that this recording onto the optical disk 311 also includes the production of an optical disk by copying the recorded data from a master disk. This optical disk 311 will subsequently be shipped for market. The user who has received this optical disk 311 will load it in the entertainment system 220. Accordingly, the entertainment system 220 will be in the state prepared with the accumulated program file as described above.

Then, in the case where the user who has received this optical disk 311 carries out a predetermined user registration process via a network and the like for a system manager who manages the server 222, the system manager allows to issue an user ID to the user. Accordingly, the user will be registered as a full member who may receive program distribution services.

### Production Process of Transmitting Program File

On the other hand, the transmitting program file is produced with the configuration and process described using FIG. 15.

In FIG. 15, at least a database 321 for scene information (hereafter notated as scene DB 321), a database 322 for image data (hereafter notated as image data DB 322), a database 323 for contribution text (hereafter notated as contribution text DB 323) and a database 324 for presents (hereafter notated as present DB 324) are connected to a computer 327 for producing transmitting program files (hereafter notated as TPI computer 327). The TPI computer 327 produces information to be accumulated in each of the DBs 321 to 324. Furthermore, the TPI computer 327 performs the control of writing/reading of information to/from each of these DBs 321 to 324.

Furthermore, a database 325 for program schedules (hereafter notated as schedule DB 325), a database 326 for customer management (hereafter notated as customer DB 326) and a database 320 for an accumulated program file (hereafter notated as accumulated program DB 320) are connected to the TPI computer 327. The schedule DB 325 accumulates schedule data for programs to be broadcasted each day of the week, for example. The customer DB 326 accumulates information of IDs and the like of the users registered as full members. The accumulated program DB 320 accumulates data of the accumulated program file supplied for market in the form of the optical disk 311, for example.

The TPI computer 327, to begin with, reads the program schedule data, which is accumulated in the schedule DB 325, and based on the program schedule data, determines the sequence of the program to be transmitted each hour of each day of the week.

Next, taking into consideration the information that is accumulated in the accumulated program DB 320, the TPI computer 327 determines the component file specifying information of FIG. 9 in order to determine the objects such as characters, background, sound effects, musical tones, effects, boards and the like that become necessary for configuring each scene of the program sequence. Moreover, the TPI computer 327 determines the control file specifying information of FIG. 9, file attribute information and conversation information so as to specify character behavior, conversations, fixed text and the like. More specifically, the TPI computer 327 determines which of each main structural element included in the component file, control file and fixed text file of the accumulated program file prepared in the entertainment system 220 is to be used. The TPI computer 327 collects these determined specifying information, file attribute information, conversation information and the like for every scene, accumulating them in the scene DB 321.

Furthermore, the TPI computer 327 carries out acquiring and editing of background images and other images not prepared as the accumulated program file, produces image data for the graphic data region of FIG. 8, and accumulates the image data into the image data DB 322.

Moreover, the TPI computer 327 corresponds the contribution text contributed (transmitted) from each user via the network 221 or server 222 and its corresponding inserting text data with the user ID of each user registered in the customer DB 326 so as to accumulate in the contribution text DB 323. Furthermore, the TPI computer 327 sums up the present points given to each user corresponding to the contribution circumstances and accumulates them into the present DB 324 by corresponding those present points with the user ID of each user. It is noted that regarding the contribution text sent from the users and the corresponding inserting text, the TPI computer 327 processes the number of letters and the like so as to accommodate the duration of the presentation, the size of the text board and such. Furthermore, the TPI computer 327 adds to this contribution text and inserting text four bits of information corresponding to the aforementioned feelings of joy, anger, sorrow and pleasure according to need.

Next, the TPI computer 327 configures a transmitting program file for each sequence by using: the scene information accumulated in the scene DB 321; the image data accumulated in the image data DB 322; the information of the desired contribution texts extracted for presentation from the contribution text that is accumulated in the contribution text DB 323; and information regarding presents accumulated in the present DB 324; and further according to the program schedule accumulated in the schedule DB 325. The TPI computer 327 sends the transmitting program files to the server 222.

The server 222 delivers the transmitting program files according to the program schedule to the entertainment systems 220 of the properly registered members accumulated in the customer DB 326.

Accordingly, as described above, the entertainment systems 220 are capable of outputting the sequential program based on the transmitting program files and accumulated program files to the monitor device.

It is noted that the server 222 may also produce and transmit the transmitting program files according to the program schedule not only of the days of the week, but also the weeks, months, seasons.

### Specific Example of Entertainment System

Next, a schematic structure of the entertainment system 220, which produces the sequential program based on the transmitting program files and accumulated program files so as to output to the monitor device, will be described.

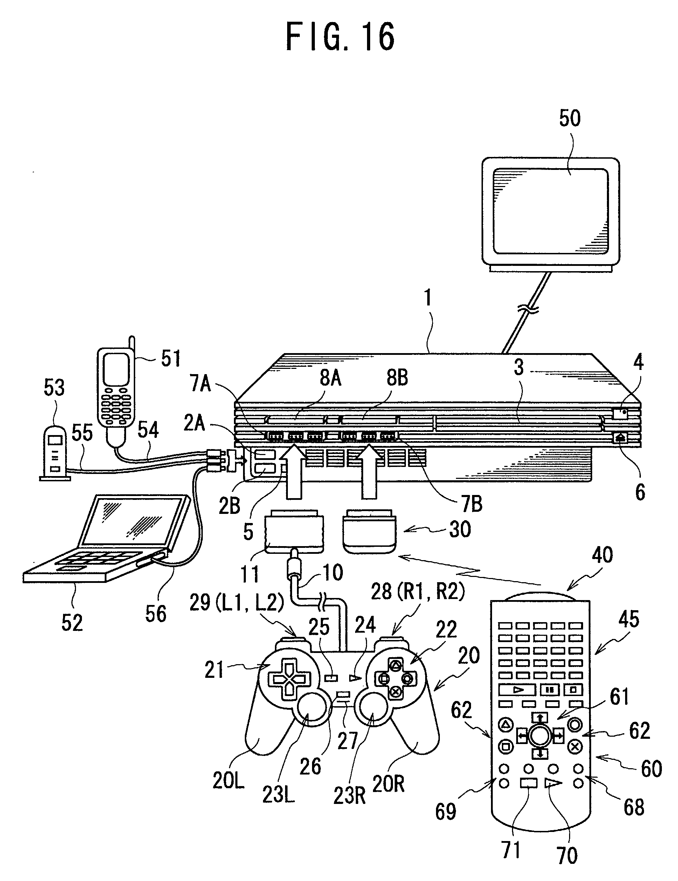

The schematic structure of an entertainment system is illustrated in FIG. 16.

In this FIG. 16, the entertainment system has a software running apparatus 1 for running, for example, what is called a video game, playing movies or music recorded on optical disks; a controller 20 or infrared remote controller 40 connected to the software running apparatus 1 and operated by a user; and a television monitor device 50 for displaying game content, movies and the like as well as outputting sound.

### Brief Description of Software Running Apparatus

The software running apparatus 1 is comprised of memory card slots 8A, 8B; controller ports 7A, 7B; a disk tray 3; buttons 6 and 4; an IEEE (Institute of Electrical and Electronics Engineers) 1394 connector 5; and USB (Universal Serial Bus) connectors 2A, 2B and the like. The memory card slots 8A, 8B are configured as such so that memory cards not shown in the figures are freely attachable/removable. The controller ports 7A, 7B are configured as such so that a connector 11 of a cable 10 which is connected to the controller 20, and a sensor unit 30 which receives infrared signals transmitted from the remote controller 40, are freely attachable/removable. The disk tray 3 is configured as such so that optical disks, for example, DVD-ROMs and CD-ROMs, may be loaded. The button 6 is an OPEN/CLOSE button for opening/closing the disk tray 3. The button 4 is an ON/STANDBY/RESET button for turning the power on or into standby, or resetting a game. Furthermore, it has been omitted from the Figure, however, a power supply switch, an audio/visual output terminal (multi AV output terminal), a PC card slot, an optical/digital output terminal, an AC power input terminal and the like are provided on the back panel of the software running apparatus 1.

The software running apparatus 1 executes, based upon various application software which includes computer software used for configuring the sequential program read from recorded media, for example, optical disks such as the DVD-ROMs and CD-ROMs and semiconductor memory and also based upon commands from the user via the controllers 20, 40, the configuration of the sequential program, running of a video game, playback of movies or music, and moreover, the inputting of various information such as letters, symbols, and images. Furthermore, the software running apparatus 1 may execute the input processing of various information such as configuring a sequential program or running a video game based on various application software downloaded via various communication lines (transmission media) such as phone lines, LANs, CATV lines, communications satellite lines.

Furthermore, the software running apparatus 1 may also save various information such as information of contribution text that is input for a sequential program, present points and, for example, various game data generated by running a video game and the like onto memory cards (omitted from the Figure) installed in the memory card slots 8A, 8B.

It is noted that either the USB connector 2A or 2B may be connected to, for example, a portable information terminal 51 including a mobile phone, a stationary or portable personal computer 52 or a terminal adapter 53 for directly connecting to a communication line or the like via their respective dedicated connector cables 54, 55 or 56. The portable information terminal 51, personal computer 52 or terminal adapter 53 may be connected to the IEEE 1394 connector 5, controllers 7A, 7B, or the PC card slot (not shown in the figures) or the like on the back panel of the housing.

### Brief Description of Controller

The controller 20 is one that the operator (user) operates when running a video game, viewing a sequential program or inputting a contribution text.

The controller 20 comprises a left grip 20L, right grip 20R, left operation part 21 and right operation part 22, left analog operation part 23L and right analog operation part 23R, first left pushbutton 29 (L1), second left pushbutton (L2) not shown in the Figure, first right pushbutton 28 (R1) and second right pushbutton (R2) not shown in the Figure and the like. The left grip 20L is a portion for the operator (user) to grip so as to hold it with the palm of the left hand. The right grip 20R is a portion for the operator to grip to hold it with the palm of the right hand. The left operation part 21 and right operation part 22 are portions for the operator to respectively operate with the left and right thumbs in the state where those grips 20L, 20R are gripped with the right and left hands of the operator. The left analog operation part 23L and right analog operation part 23R are portions for the operator to respectively analog operate (operate the joystick) with the left and right thumbs in the state where the grips 20L, 20R are gripped with the right and left hands of the operator. The first left pushbutton 29 (L1) and the second left pushbutton (L2) not shown in the figures that are positioned there below are buttons for the operator to respectively operate by depressing with the left index finger and middle finger, for example. The first right pushbutton 28 (R1) and the second right pushbutton (R2) not shown in the figures that are positioned there below are buttons for the operator to respectively operate by depressing with the right index finger and middle finger, for example.

"Up", "down", "left", and "right" direction keys, which are used in the case where the user performs operations, for example, to move a cursor or game characters displayed on a screen upwards, downwards, leftwards or rightwards and such on the screen, are provided on the left operation part 21. It is noted that the "up", "down", "left", and "right" direction keys are not only for directional commands of upwards, downwards, leftwards or rightwards, but may also be used for directional commands in diagonal directions. For example, by depressing the "up" direction key and "right" direction key simultaneously, the operator may give a directional command of an upper-right diagonal direction. It is the same with the other keys, wherewith, for example, by depressing the "down" direction key and "left" direction key simultaneously, the operator may give a directional command of a lower-left diagonal direction.

Furthermore, four command buttons ("Δ", "□", "x", "○" buttons respectively provided with Δ, □, x, ○ shaped stamps) respectively assigned with different functions according to the application software are provided on the right operation part 22. As a specific example, in the case of application software provided with character input functions for contribution text and the like, out of these four command buttons, for example, the "○"/"x" buttons are assigned functions for the operator to command, such as the ON/ OFF command of virtual buttons pointed at by the cursor; select/ delete selection of menu items upon the screen; confirm/ delete input characters; and execute/ cancel editing. Furthermore, in the case of application software provided with information input functions for characters and the like, the "□" button is assigned a function for the operator to command, for example, for kana character input or kanji conversion of Roman character input; and the "Δ" button is assigned a function for the operator to command the non-conversion of input characters. It is noted that the functions assigned to each of these buttons and keys are examples, wherein various functions may be assigned by the application software.

At times of non-inclined operation the left analog operation part 23L and right analog operation part 23R are held in an upright state (non-diagonal state) position (standard position). Furthermore, when the left analog operation part 23L and right analog operation part 23R are operated at an inclination, the controller 20 detects coordinate values of the XY coordinates according to the amount of slant and direction in contrast to the standard position. Then, the controller 20 sends these coordinate values to the software running apparatus 1 as operation output. Furthermore, the left analog operation part 23L or right analog operation part 23R can actualize the same functions as the "up", "down", "left", and "right" direction keys.

Moreover, the controller 20 is provided with a mode selection switch 26, light indicator 27, select button 25, start button 24 and the like. The mode selection switch 26 is a switch for performing the selection of the operation mode, which makes the functions of the left and right operation parts 21, 22 and left and right analog operation parts 23L, 23R operate (analog operation mode) or stop (digital operation mode). The light indicator 27 is provided with a light emitting diode (LED) for the user to recognize the selected operation mode by displaying light. The start button 24 is a button for the operator to command execution start, pause and the like of an application. The select button 25 is a button for the operator to command the displaying and such of the menu display upon the screen of a television monitor 50, operation panel, software keyboard-mode window and the like. It is noted that in the case where the analog operation mode is selected by the mode selection switch 26, the light indicator 27 is controlled to turn ON, resulting in the left and right analog operation parts 23L, 23R to be in an operating state. On the other hand, in the case where the digital operation mode is selected, the light indicator 27 is controlled to turn OFF, resulting in the left and right analog operation parts 23L, 23R to be in non-operating state.

When various buttons or operating parts upon this controller 20 are operated by the user, the controller 20 generates operating signals according to those operations, wherein those operating signals are transmitted to the software running apparatus 1 via the cable 10, connector 11 and controller port 7.

The controller 20 also includes a vibration generating mechanism within the left and right grips 20L, 20R. The vibration generation mechanism includes a weight eccentric from the rotation axis of a motor, for example, and the motor rotates that weight so as to vibrate controller 20. This vibration generation mechanism operates corresponding to a command from the software running apparatus 1. Namely, by causing the vibration generation mechanism to operate, the software running apparatus 1 conveys the vibration to the user's hand.

### Brief Description of Infrared Remote Controller

The infrared remote controller 40 is one that the operator (user) operates mainly when playing back DVDs and the like. In the same way as the controller 20, the remote controller 40 may also be utilized when viewing the sequential program or executing the input of contribution text and the like, or when running game application software.

Roughly classified, the remote controller 40 is comprised of a DVD operating part 45 and application controller 60.

The DVD operating part 45 comprises as the main buttons an audio button, program button, angle button, repeat button, subtitle button, clear button, slow button, scan button, preview/next button, play button, title button, display button, shuffle button, number button, time button, stop button, DVD menu button, return button and the like. The audio button is a button utilized in switching over the DVD sound. The program button is a button to operate when carrying out the playback of images and the like in a desired order. The angle button is a button to operate at the time of switching over the angle of the displayed image. The repeat button is a button to operate at the time of repeated playback. The subtitle button is a button to operate when switching over to subtitles. The clear button is a button to operate when canceling input. The slow button is a button to operate at times of slow playback. The scan button is a button to operate when searching for a desired screen. The preview/next button is a button utilized in the transferring operation to the previous screen or the next screen. The play button is a button for operating the playback command. The title button is a button to operate when displaying the title menu. The display button is a button to operate when displaying the control menu screen. The shuffle button is a button to operate when specifying shuffle playback. The number button is a button to operate when selecting a numbered item displayed upon the screen. The time button is a button to operate when displaying playback time and the like. The stop button is a button for commanding playback to stop. The DVD menu button is a button to operate when displaying the DVD menu. The return button is a button to operate when returning to a previously selected screen.

The application controller 60 is comprised of almost the same buttons and keys as are provided upon the controller 20 except for the left and right analog operation parts 23L, 23R. More specifically, the application controller 60 is comprised of first and second left buttons 69 (L1, L2), which are equivalent to the first left pushbutton 29 and second left pushbutton of the controller 20; first and second right buttons 68 (R1, R2), which are equivalent to the first right pushbutton 28 and second right pushbutton of the controller 20; "Δ", "□", "x", "○" buttons 62, which are equivalent to each button of the right operation part 22 of the controller 20; "up", "down", "left", and "right" direction keys 61, which are equivalent to each key of the left operation part 21 of the controller 20; and the others are a start button 70 and select button 71.

When various buttons or operating parts are operated by the user, the remote controller 40 generates infrared signals corresponding to these operations. These infrared signals are received by the sensor unit 30. The sensor unit 30 converts these infrared signals into electric signals so as to transmit to the software running apparatus 1.

### Internal Configuration of Software Running Apparatus

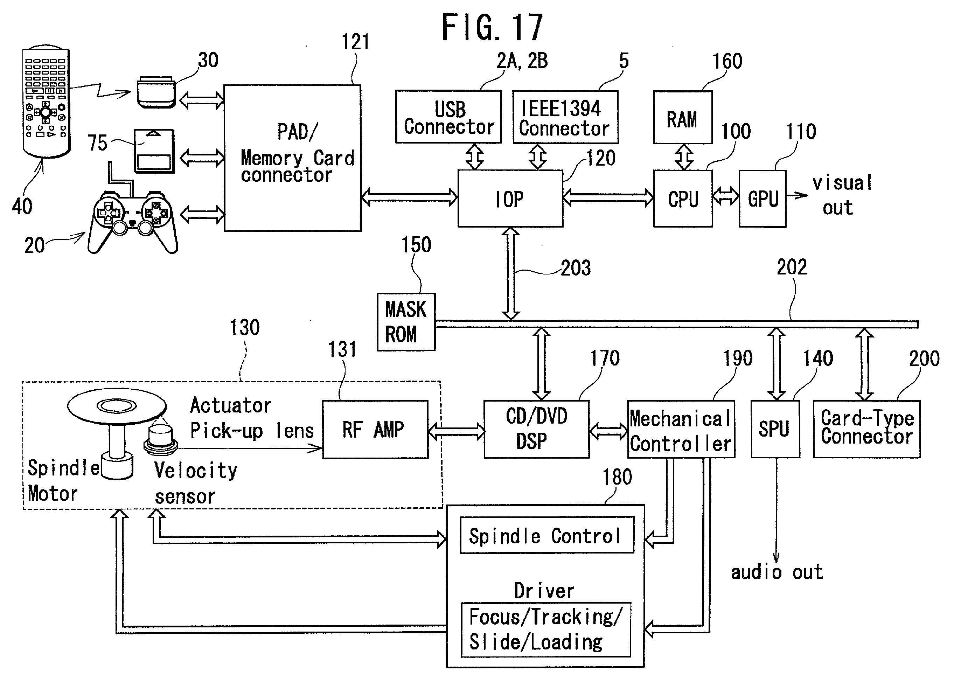

Next, an outline of the internal circuitry of the software running apparatus 1 will be described using FIG. 17.

The software running apparatus 1 comprises a main CPU 100, graphic processing unit (GPU) 110, IO processor (IOP) 120, optical disk player 130, main memory 160, MASK-ROM 150, and sound processing unit (SPU) 140 and the like. The main CPU 100 performs signal processing and the control of internal main structural elements based on application software such as computer software and game software for outputting the sequential program to the monitor device 50. The GPU 110 performs image processing. The IOP 120 performs interfacing between the exterior and interior of the apparatus and processing for maintaining downward compatibility. The main memory 160 has the function of a buffer that temporarily stores data read from optical disks or the work area of the main CPU 100. The MASK-ROM 150 stores, for example, initial setting software for the software running apparatus 1, and software (what is called a handler) for suspending and such the processing of the main CPU 100 and IOP 120 when various switches or buttons are pushed and then executing processing corresponding to the operations of these switches and buttons. The SPU 140 performs acoustic signal processing. The optical disk player 130 performs playback of optical disks such as the DVDs and CDs, which are recorded with application software or multi-media data. Furthermore, the optical disk player 130 is comprised of a spindle motor, optical pickup, RF amp 131 and sliding mechanism and the like. The spindle motor rotates optical disks such as DVDs and CDs. The optical pickup reads the signals that are recorded on the optical disks. The sliding mechanism moves the optical pickup along the disk radius. The RF amp 131 amplifies the output signal from the optical pickup.

Moreover, this software running apparatus 1 also has a CD/DVD digital signal processor 170 (hereafter notated as DSP 170), driver 180, mecha-controller 190 and card-type connector 200 (hereafter notated as PC card slot 200). By digitizing output signals from the RF amp 131 of the optical disk player 130, and applying, for example, error correction processing (CIRC processing) or decode/encode processing and the like, the DSP 170 plays back signals that are recorded on the optical disks. The driver 180 and mecha-controller 190 perform rotation control of the spindle motor of the optical disk player 130; focus/ tracking control of the optical pickup; and loading control of the disk tray and the like. The PC card slot 200 is an interface device for connecting, for example, a communication card and external hard disk drive and the like.

Each of these parts is respectively connected to the other mainly via bus lines 202, 203 and the like. It is noted that the main CPU 100 and GPU 110 are connected by a dedicated bus. Furthermore, the main CPU 100 and IOP 120 are connected by the SBUS. The IOP 120, DSP 170, MASK-ROM 150, SPU 140 and PC card slot 200 are connected by the SBUS.

By running initial setting software and the like stored on the MASK-ROM 150 or operating system software for the main CPU read from an optical disk, the main CPU 100 controls all operations of the apparatus 1. Furthermore, by running various application software and the like including computer software for configuring the sequential program described above, the main CPU 100 also controls various operations of the software running apparatus 1. It is noted that these various application software are read from optical disks, for example, CD-ROMs and DVD-ROMs and the like so as to be loaded into the main memory 160, or downloaded via communication networks.

By running operating system software for the IO processor, which is stored in the MASK-ROM 150, the IOP 120 controls data input/output with a PAD/memory card connector 121; data input/output with the USB connectors 2A, 2B; data input/output with the IEEE 1394 connector 5; and data input/output with the PC card slot 200, as well as performing their data protocol conversion and the like. The PAD/memory card connector 121 controls the transmitting/receiving of signals to/from the controllers 20, 40 and memory card 75. It is noted that the device ID of this software running apparatus 1 is also stored in the MASK-ROM 150.

The GPU 110 has the function of a geometry transfer engine that performs processing of coordinate transformation and the like, and the function of a rendering processor; and performs drawing according to the drawing command from the main CPU 100 so as to store the drawn images in a frame buffer not shown in the figures. More specifically, for example, in the case where various application software, which are recorded on optical disks, are utilized for so-called three-dimensional (3D) graphics, the GPU 110 performs coordinate calculations and the like by geometric operation processing of polygons for configuring three-dimensional objects; moreover, calculation is performed by rendering processing for drawing this three-dimensional object upon a two-dimensional screen so as to write upon the frame buffer. Then, the GPU 110 outputs video signals corresponding to this formed image.

The SPU 140 includes an adaptive differential pulse code modulation (ADPCM) decode function, audio signal playback function and signal modulation function and the like. The ADPCM decode function is a function for decoding acoustic data that has been adaptive prediction encoded. The audio signal playback function is a function for playing back and outputting audio signals such as sound effects by playing back waveform data, which is stored in an internal or external sound buffer (not shown in the figures) of the SPU 140. The signal modulation function is a function for modulating and playing back waveform data, which is stored in the sound buffer. The SPU 140, based on commands from the main CPU 100, generates audio signals such as musical tones and sound effects and the like from waveform data, which is stored in the sound buffer, and also operates as a so-called sampling sound source.

When the software running apparatus 1 having the configuration as the above, for example, is energized, initially setting software for the main CPU and operating system software for the IOP are respectively read from the MASK-ROM 150, wherewith the corresponding software for the main CPU 100 and IOP 120 are run. Accordingly, the main CPU 100 centrally controls each part of the software running apparatus 1. Furthermore, the IOP 120 controls the input/output of signals with the controllers 20, 40 and memory card 75 and the like. Furthermore, after the main CPU 100 performs initial processing such as checking of operations and the like, application software that is recorded on an optical disk is read by controlling the optical disk player 130, wherewith after loading into the main memory 160, that application software is run. By the execution of this application software, the main CPU 100 controls the GPU 110 and SPU 140 according to the user's command accepted from the controllers 20, 40 via the IOP 120, and controls the display of images and generation of sound effects and musical tones. It is noted that if the case where playback of movies and the like recorded on optical disks, for example, is the same as with this software running apparatus 1, the main CPU 100 controls the GPU 110 and SPU 140 according to the user's command accepted from the controllers 20, 40 via the IOP 120, and controls the display of images of movies played back from optical disks and generation of sound effects and musical tones and the like.

### Configuration of Application Software for Producing Sequential Programs

Next, based on transmitting program files and accumulated program files, the configuration of application software for outputting to the monitor 50 the sequential program generated by the software running apparatus 1 shown in FIG. 16 and FIG. 17.

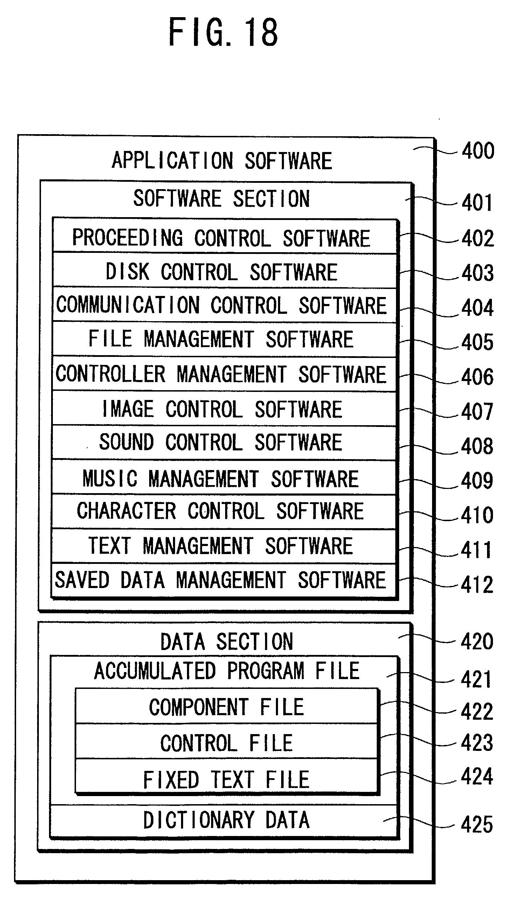

This application software has such data configuration as shown in FIG. 18. It is noted that this data configuration shown in FIG. 18 is one that conceptually represents only the principal parts of the application software, which generates sequential programs based on transmitting program files transmitted from the server 222 over a network such as described above and accumulated program files that each software running apparatus 1 reads from optical disks and the like so as to display and the like the generated program upon monitor screens, and is not one representing an actual software configuration. Furthermore, this application software is recorded on recording media, which are of optical disks and the like such as DVD-ROMs and CD-ROMs, and may be downloaded via communication lines.

Roughly classified, the application software 400 shown in this FIG. 18 has a software section 401 and data section 420. The software section 401 is comprised of computer software (program configuration software), which is run for the main CPU 100 to display sequential programs. The data section 420 is comprised of various data which is utilized when executing the display of sequential programs.

The data section 420 has as various data at least the accumulated program file 421 as described in FIG. 5 and dictionary data 425. It is noted that the dictionary data 425 is dictionary data for kana/kanji conversion and romaji/kanji conversion, which is utilized in the case such as inputting contribution text, for example.

The software section 401 has at least proceeding control software 402, disk control software 403, communication control software 404, file management software 405, controller management software 406, image control software 407, sound control software 408, music management software 409, character control software 410, text management software 411 and saved data management software 412 and the like.

The proceeding control software 402 is software for performing the control of proceeding with the sequential programs based on the transmitting program file to be sent from the server 222. The disk control software 403 is software for controlling data read out and the like of the accumulated program files from the optical disks corresponding to the proceeding and such of the programs. The communication control software 404 is software that controls data communication with the server 222. The file management software 405 is software that performs file management of the accumulated program files and transmitting program files. The controller management software 406 is software for managing the input signals from the controller 20 and infrared remote controller 40. The image control software 407 is software that performs the control of the generation of program images and displaying of these program images upon the monitor screen. The sound control software 408 is software that performs the control of the generation and outputting of sound during programs. The music management software 409 is software for managing output and the like of musical pieces during programs. The character control software 410 is software for controlling, based on the character behavior attribute information of the transmitting program file, the behavior of characters to appear in programs. The text management software 411 is software for controlling, based on the conversation attribute information and fixed text attribute information of the transmitting program file, the contribution text and inserting text to be displayed in the programs. The saved data management software 412 is software for storing and reading the information to be stored out of the transmitting program files transmitted from the server 222; storing and reading the written data created as contribution text; and managing to-be-stored data, such as storage of user IDs.

### Process Flow When Configuring Sequential Program by Software Running Apparatus

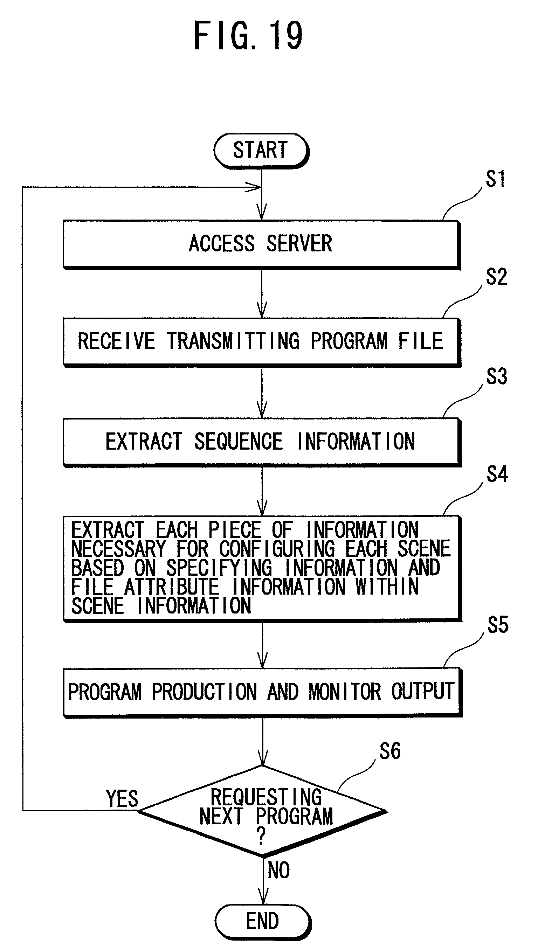

In the following, the main process flow of this application software shown in the above FIG. 18 will be described using FIG. 19. It is noted that the flow of the flow chart described below is realized by running application software by the built-in main CPU of the software running apparatus 1 shown in FIG. 16 and FIG. 17.

In FIG. 19, to begin with, during the processing of step S1, the communication control software 404 accesses the server 222; moreover, during the processing of step S2, it receives the transmitting program file.

Next, during the processing of step S3, the file management software 405 extracts the sequence information from the received transmitting program files. Furthermore, during the processing of step S4, the file management software 405 extracts each piece of the scene information from the sequence information. Moreover, the file management software 405 extracts the information of each of the main structural elements necessary for configuring each scene within the program based on the specifying information and file attribute information within each piece of the scene information.

Next, during the processing of step S5, the proceeding control software 402 generates a sequential program based on the transmitting program file and the accumulated program file that the file management software 405 manages. Furthermore, working in cooperation with the image control software 407, sound control software 408, music management software 409, character control software 410 and text management software 411 and the like, the proceeding control software 402 at this time outputs to the monitor device the images, sound and musical pieces of the sequential program.

Subsequently, during the processing of step S6, working in cooperation with the controller management software 406, the proceeding control software 402 judges whether or not viewing of the next program is requested by the user; and when viewing of the next program is requested, returns to the processing of step S1, performing the transmission request of the transmitting program file regarding the next program via the communication control software 404. On the other hand, in the case where viewing of the next program is not requested by the user, the proceeding control software 402 concludes the process of FIG. 19.

As described above, the communication system of FIG. 1 is made allowing for setting freely (freely within the range of possible combination patterns) the program configuration such as the scene or stage and the like, characters, background, music and sound effects and the like of the program to be output to the monitor device of the entertainment system 220 by appropriately changing each main structural element of scene information in the transmitting program file which are generated in the server 222 and changing the combinations of each main structural element within the accumulated program file which are prepared in the entertainment system 220. Accordingly, the communication system of FIG. 1 can deliver programs able to further raise the interest level of the user (viewer) since such conventional situations where the same program is always provided no longer exists.

It is noted that the above description is an example of the present invention. As a result, the present invention is not limited to the example described above, and needless to say, various modifications thereto according to design and such can be made without deviating from the technical spirit and scope of the present invention.

The example described above gives an example of changing the scene and stage and the like within a program, however, the present invention is also applicable to the case where the program itself is changed.

Furthermore, the network terminal receiving program distribution is not limited to the software running apparatus 1 such as shown in FIG. 16 and FIG. 17, and may be a mobile phone or mobile information terminal provided with data communication functions. It is noted that in the case where the mobile phone is utilized at the network terminal that receives the program distribution, it is possible to employ a system where that program distribution to the mobile phone will not be carried out unless after, for example, the mobile phone and the software running apparatus 1 are connected, user registration from the mobile phone via the software running apparatus 1 is carried out, wherewith full membership registration is completed. Accordingly, only the user who possesses the software running apparatus 1 may receive program distribution to the mobile phone, allowing for the prevention of unauthorized use and such of the distributed program.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. A program information distribution method, comprising the steps of:
managing a pre-distributed plurality of elemental information for program scene configuration;
specifying a plurality of elemental information, which is to be utilized for configuring a desired program scene, from a plurality of elemental information for program scene configuration that a terminal apparatus linked via a network holds;
generating terminal control information for configuring the desired program scene by combining each piece of the specified plurality of elemental information; and
distributing to the terminal apparatus the terminal control information.

2. The program information distribution method according to claim 1, further comprising the step of:
arranging the terminal control information of each piece of a plurality of scenes which configures a desired program, according to the broadcasting order of the plurality of scenes; and distributing to the terminal apparatus.

3. The program information distribution method according to claim 1 or 2, further comprising the steps of:
acquiring elemental information for program scene configuration that the terminal apparatus does not hold; and
distributing to the terminal apparatus the acquired elemental information along with the terminal control information.

4. A program information distribution apparatus comprising:
a managing unit that manages a pre-distributed plurality of elemental information for program scene configuration;
an elemental information specifying unit that specifies elemental information to be utilized for configuring a desired program scene out of a plurality of elemental information for program scene configuration that a terminal apparatus linked via a network holds;
a terminal control information generating unit that generates terminal control information for configuring the desired program scene by combining each piece of the specified elemental information; and
a distributing unit that distributes to the terminal apparatus the terminal control information.

5. The program information distribution apparatus according to claim 4, wherein
the terminal control information generating unit arranges the terminal control information of each piece of a plurality of scenes which configures a desired program, according to the broadcasting order of the plurality of scenes; and distributes to the terminal apparatus.

6. The program information distribution apparatus according to claim 4 or 5, further comprising:
an elemental information acquiring unit that acquires elemental information for program scene configuration that the terminal apparatus does not hold;
wherein the distributing unit distributes to the terminal apparatus the acquired elemental information along with the terminal control information.

7. A program configuration method comprising the steps of:
pre-holding a plurality of elemental information for at least program scene configuration;
receiving predetermined control information distributed via a network;
determining a plurality of elemental information specified by the predetermined control information out of the pre-held plurality of element information;
configuring a program scene by combining each piece of the determined plurality of elemental information according to specifications of the predetermined control information; and
monitor outputting the configured program scene.

8. The program configuration method according to claim 7, further comprising the steps of:
receiving not pre-held elemental information for program scene configuration along with the predetermined control information; and
configuring a program scene by incorporating the not pre-held program scene information within the program scene, which is obtained by combining the pre-held plurality of elemental information.

9. A software running apparatus, which runs program configuration software;
the program configuration software comprising:
a step of pre-holding a plurality of elemental information for at least program scene configuration;
a step of receiving predetermined control information distributed via a network;
a step of determining a plurality of elemental information specified by the predetermined control information out of the pre-held plurality of elemental information;
a step of configuring a program scene by combining each piece of the determined plurality of elemental information according to specifications of the predetermined control information; and
a step of monitor outputting the configured program scene.

10. The software running apparatus, which runs program configuration software, according to claim 9, wherein the program configuration software further comprises:
a step of receiving not pre-held elemental information for program scene configuration along with the predetermined control information; and
a step of configuring a program scene by incorporating the not pre-held program scene information within the program scene, which is obtained by combining the pre-held plurality of elemental information.

11. A program distribution system comprising:
a program information distribution apparatus, which manages a pre-distributed plurality of elemental information for program scene configuration; specifies a plurality of elemental information which is to be utilized for configuring a desired program scene, out of a plurality of elemental information for program scene configuration that a terminal apparatus linked via a network holds; generates terminal control information for configuring the desired program scene by combining each piece of the specified elemental information; and distributes to the terminal apparatus the terminal control information; and
a terminal apparatus, which pre-holds a plurality of elemental information for at least program scene configuration; receives the terminal control information distributed via a network; determines a plurality of elemental information specified by the terminal control information out of the held plurality of elemental information; configures a program scene by combining each piece of the determined plurality of elemental information according to specifications of the terminal control information; and monitor outputs the configured program scene.

12. The program distribution system according to claim 11, wherein
the program distribution apparatus arranges the terminal control information of each of a plurality of scenes which configures a desired program, according to the broadcasting order of the plurality of scenes; and distributes to the terminal apparatus.

13. The program distribution system according to claim 11 or 12, wherein
the program distribution apparatus acquires elemental information for program scene configuration that the terminal apparatus does not hold; and distributes to the terminal apparatus the acquired elemental information along with the terminal control information.

14. The program distribution system according to claim 13, wherein
the terminal apparatus receives not pre-held elemental information for program scene configuration along with the terminal control information; and configures a program scene by incorporating the not pre-held elemental information within the program scene obtained by combining the pre-held plurality of elemental information.

15. A computer-readable recording medium, on which program configuration software is recorded,
the program configuration software comprising:
a plurality of elemental information for at least program scene configuration;
a step of receiving predetermined control information distributed via a network;
a step of determining a plurality of elemental information specified by the predetermined control information out of the recorded plurality of elemental information;
a step of configuring a program scene by combining each piece of the determined plurality of elemental information according to specifications of the predetermined control information; and
a step of monitor outputting the configured program scene.

16. The computer-readable recording medium, on which program configuration software is recorded,
the program configuring software according to claim 15, further comprising:
a step of receiving non-recorded elemental information for program scene configuration along with the predetermined control information; and
a step of configuring a program scene by incorporating the non-recorded program scene information within the program scene, which is obtained by combining the recorded plurality of element information.

17. A program configuration software, comprising:
a step of pre-holding a plurality of elemental information for at least program scene configuration;
a step of receiving predetermined control information distributed via a network;
a step of determining a plurality of elemental information specified by the predetermined control information out of the held plurality of elemental information;
a step of configuring a program scene by combining each piece of the determined plurality of elemental information according to specifications of the predetermined control information; and
a step of monitor outputting the configured program scene.
